# EUROPÄISCHE PATENTSCHRIFT

(11) **EP 0 636 286 B1**
(45) Veröffentlichungstag und Bekanntmachung des Hinweises auf die Patenterteilung: **06.05.1999**
(21) Anmeldenummer: 94906828.2
(22) Anmeldetag: 04.02.1994
(51) Int. Cl.: H02P 1/18, H02P 3/08

(54) **VERFAHREN ZUR DREHZAHLSTEUERUNG EINES MOTORS**
PROCESS FOR CONTROLLING THE REVOLUTION SPEED OF A MOTOR
PROCEDE DE REGULATION DE LA VITESSE D'UN MOTEUR

(30) Priorität: 18.02.1993 DE 4304960
(43) Veröffentlichungstag der Anmeldung: 01.02.1995
(73) Patentinhaber: ROBERT BOSCH GMBH, 70442 Stuttgart (DE)
(72) Erfinder: LAMM, Hubert, D-77876 Kappelrodeck (DE)
(74) Vertreter: Röser, Peter, Dipl.-Ing.
(86) Internationale Anmeldenummer: DE9400106
(87) Internationale Veröffentlichungsnummer: WO9419863

(56) Entgegenhaltungen:
- DE-A- 3 633 347
- US-A- 5 089 761
- PATENT ABSTRACTS OF JAPAN vol. 12, no. 389 (E-669) 17. Oktober 1988 & JP,A,63 129 874 (MATSUSHITA ELECTRIC CO LTD) 2. Juni 1988

## Beschreibung

### Stand der Technik

Die Erfindung betrifft ein Verfahren zur Drehzahlsteuerung eines Motors nach dem Oberbegriff des Anspruchs 1. Das Japanische Patent JP-A-63129874 offenbart ein Verfahren mit den Merkmalen des Oberbegriffs des Anspruchs 1. Es ist bekannt, eine Verstellung der verschiedensten Einrichtungen, beispielsweise in Kraftfahrzeugen, über Stellmotoren durchzuführen. Diese Stellmotoren werden häufig zur Komfortverbesserung in Kraftfahrzeugen, zum Beispiel der Sitz- oder Scheibenverstellung und ähnliches, eingesetzt. In aller Regel sind diese Verstellmotoren mit einer integrierten Motorelektronik ausgestattet oder werden von einer Zentralelektronik gesteuert. Um eine genaue Positionierung der mit den Stellmotoren angetriebenen Systeme zu erreichen, ist es bekannt, einen als Weggeber ausgebildeten Inkrementalgeber zu integrieren, der über ein Bedienelement ermöglicht, die zu verstellenden Einrichtungen in unterschiedliche Positionen zu überführen.

Es ist jedoch nachteilig, daß durch ein mögliches ruckartiges Anschalten des Stellmotors die eigentliche Verstellmechanik einer überaus großen mechanischen Belastung ausgesetzt wird, die zu einem vorzeitigen Verschleiß der mechanischen Teile führen kann. Weiterhin ist jedes Anschalten des Stellmotors mit einem Anlaufkurzschlußstrom verbunden, der die in einem Kraftfahrzeug nur begrenzt vorhandene Spannungsquelle stark belastet.

### Vorteile der Erfindung

Der Erfindung liegt die Aufgabe zugrunde, ein Verfahren zur Drehzahlsteuerung eines Motors der gattungsgemäßen Art zu schaffen, mit dem eine Motorsteuerung mit einem reduzierten Anlaufkurzschlußstrom und einem reduzierten Anlaufdrehmoment möglich ist.

Erfindungsgemäß wird die Aufgabe durch die im Kennzeichen des Anspruchs 1 angegebenen Merkmale gelöst.

Durch die Pulsweitenmodulation wird in einfacher Weise erreicht, daß das Steuersignal in Zusammenarbeit mit dem Inkrementalgeber problemlos eine Drehzahlsteuerung des Motors durchführen kann. Durch die Zurverfügungstellung mehrerer möglicher Drehzahlen wird neben der Komfortverbesserung durch genauere Positioniermöglichkeiten der zu verstellenden Einrichtung insbesondere ein reduziertes Anlaufdrehmoment erreicht. Damit wird eine ruckartige Belastung der die Verstellung bewirkenden mechanischen Teile vermieden.

Weiterhin ist durch die Einstellung einer vorerst verminderten Motordrehzahl möglich, einen sogenannten Sanftstart bzw. Sanftstop des Motors durchzuführen. Hierbei ist vorteilhaft, daß durch ein allmähliches Hochfahren der Motordrehzahl der die Spannungsquelle belastende Anlaufkurzschlußstrom reduziert werden kann und darüber hinaus ein schwingungsfreies und damit geräuschvermindertes Einpegeln von mechanischen Teilen bis in den maximalen Lastbereich möglich ist.

In weiterer Ausgestaltung der Erfindung ist vorgesehen, daß die Motordrehzahl überwacht und mit einem Referenzwert verglichen wird. Bei einer Mindestabweichung kann über die Pulsweitenmodulation des Steuersignals eine Anpassung der Motordrehzahl erfolgen. Hiermit kann in vorteilhafter Weise erreicht werden, daß trotz einer eventuell zu niedrigen Batteriespannung bzw. einer zu großen Last, die Motordrehzahl auf das Minimum eingestellt werden kann, das notwendig ist, um eine ausreichende Verstellgeschwindigkeit zu erreichen.

Weitere vorteilhafte Ausgestaltungen der Erfindung ergeben sich aus den in den Unteransprüchen aufgeführten Maßnahmen.

### Zeichnung

Die Erfindung wird nachfolgend in Ausführungsbeispielen anhand der zugehörigen Zeichnung näher erläutert.

Es zeigen:
- Figur 1: ein Steuersignalverlauf am Beispiel eines Sanftstarts und
- Figur 2: ein Steuersignalverlauf am Beispiel eines Sanftstops.

### Beschreibung der Ausführungsbeispiele

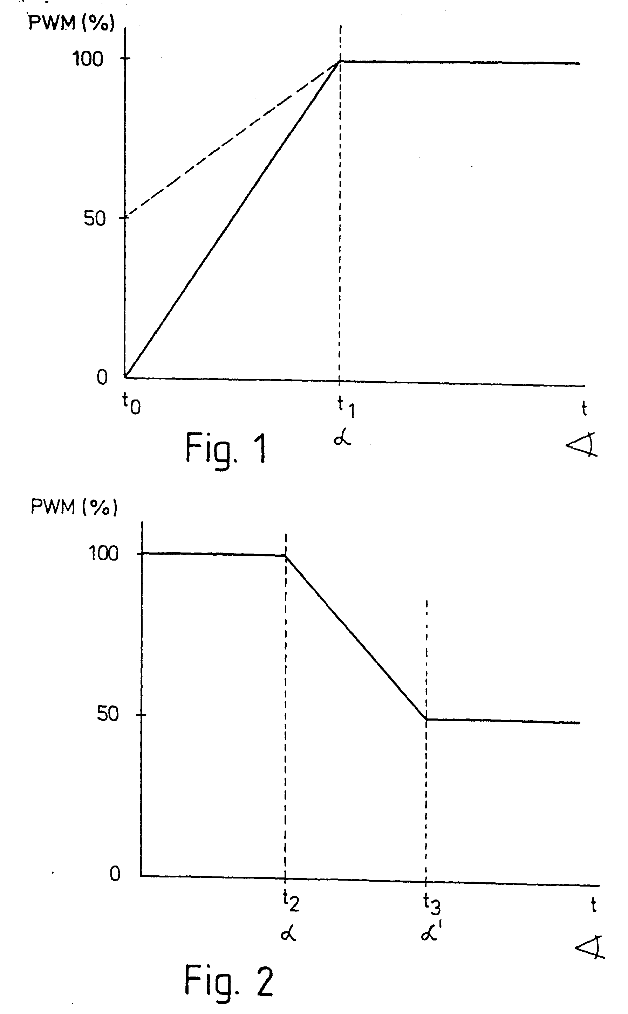

In Figur 1 ist der Verlauf eines Steuersignals gezeigt, bei dem sich die Pulsweitenmodulation in Abhängigkeit von der Zeit oder dem Weg verändert. Zu einem Startzeitpunkt t₀ besitzt das Steuersignal einen Ausgangswert, der entweder Null oder wie mit dem gestrichelten Signalverlauf angedeutet eine von Null abweichende Größe besitzt. Da das Steuersignal eine Leistungsendstufe ansteuert, die beispielsweise über eine Spannungsregelung die Drehzahl eines Stellmotors bestimmt, ist jedem Ausgangswert des Steuersignals eine bestimmte Drehzahl des Stellmotors zugeordnet.

Im gezeigten Beispiel wird nunmehr das Steuersignal bis zu einem Zeitpunkt t₁, der beispielsweise 0,25 Sekunden betragen kann, monoton bis auf den Endwert von 100 % pulsweitenmoduliert. Mit der monotonen Pulsweitenmodulation des Steuersignals wird gleichzeitig die Drehzahl des Stellmotors bis zu seinem Endwert erhöht. Durch diese einen Sanftstart beinhaltende allmähliche Erhöhung der Motordrehzahl wird erreicht, daß mit dem Einschaltzeitpunkt kein großer Anlaufkurzschlußstrom auftritt und über ein reduziertes Anlaufdrehmoment eine langsam steigende Kraftübertragung auf die Verstellmechanik erreicht wird. Da die Stellmotoren in der Regel über ein zwischengeschaltetes Getriebe die eigentliche Verstellfunktion ausführen, ist mit dem beschriebenen Sanftstart gleichzeitig eine Geräuschverminderung, zum Beispiel durch ein Getriebelose, verbunden.

In vorteilhafter Weise kann durch die Motorelektronik der Drehzahlverlauf beim Start des gesamten Motorsystems beobachtet werden und indem dieses mit einem erwarteten Drehzahlverlauf verglichen wird, kann bei einer Abweichung, das heißt, daß zu einem bestimmten Zeitpunkt t die an sich erwartete Motordrehzahl noch nicht eingetreten ist geschlußfolgert werden, daß beispielsweise an der Verstellmechanik ein Defekt bzw. eine Behinderung vorliegt, die durch eine zu große Krafterfordernis zu einer Zerstörung des Stellmotors führen könnte. Somit kann die beschriebene Motoransteuerung gleichzeitig zu einer Diagnose des gesamten Verstellsystems genutzt werden.

Als Ausgangswert für die Drehzahleinstellung des Stellmotors kann - wie im Beispiel mit der gestrichelten Linie angedeutet - auch eine gegenüber der Enddrehzahl verringerte Drehzahl, im Beispiel bei einer 50%igen Pulsweitenmodulation, genutzt werden. Somit kann anstelle eines konstant linearen Anstiegs der Pulsweitenmodulation eine schritt-bzw. intervallmäßige Erhöhung der Drehzahl eingestellt werden.

Anstelle der zeitabhängigen Steuerung der Pulsweitenmodulation kann auch eine wegabhängige Steuerung der Pulsweitenmodulation durchgeführt werden. Dabei kann ein Winkelgeber eingesetzt werden, der die Pulsweitenmodulation in Abhängigkeit eines Winkels α reguliert, so daß bei Erreichen eines Winkels α beispielsweise von 180° das Steuersignal den Endwert angenommen hat und damit der Stellmotor seine Nenndrehzahl erreicht hat.

In Figur 2 ist der Verlauf des Steuersignals am Beispiel eines Sanftstops gezeigt. Zu einem Zeitpunkt t₂ wird das Steuersignal über die Zeit monoton bis zu einem Zeitpunkt t₃, im Beispiel auf 50 %, pulsweitenmoduliert. Damit beträgt durch die direkte Abhängigkeit des pulsweitenmodulierten Steuersignals mit der Drehzahl des Stellmotors die Drehzahl des Stellmotors zum Zeitpunkt t₃, wobei t₃ beispielsweise t₂ + 0,25 Sekunden beträgt, nur noch die Hälfte der ursprünglichen Nenndrehzahl.

In ganz anologer Weise kann selbstverständlich das Steuersignal bis auf den Endwert Null heruntermoduliert werden.

Wie bereits zu Figur 1 beim Sanftstart genannt, kann die Pulsweitenmodulation des Steuersignals auch über einen wegabhängigen Winkelgeber erfolgen, so daß im Beispiel bei einem Winkel α'=α + 180° das Steuersignal ebenfalls auf 50 % des Ausgangswertes pulsweitenmoduliert wird. Durch diese eingestellte reduzierte Drehzahl des Stellmotors ist vorteilhafterweise eine verbesserte Feineinstellung der zu verstellenden Einrichtungen, beispielsweise die Einstellung einer bestimmten Sitzposition oder eines bestimmten Fensteröffnungsgrades bei Kraftfahrzeugen möglich.

Es kann jedoch infolge einer zu niedrigen Batteriespannung vorkommen, daß die sich einstellende Motordrehzahl des Stellmotors zu gering ist, um eine gewünschte ausreichende Stellgeschwindigkeit zu erreichen. Hier kann in einfacher Weise die momentane tatsächliche Drehzahl überwacht werden und diese mit einer festgelegten Mindestdrehzahl verglichen werden. Ist nun die tatsächliche Motordrehzahl höher als die als Referenzwert dienende festgelegte Mindestdrehzahl, erfolgt über das Steuersignal kein Eingriff in das Motorsystem. Sollte die tatsächliche Motordrehzahl jedoch unter dem Referenzwert liegen, kann über eine stufenweise Pulsweitenmodulation des Steuersignals, die über eine hier nicht näher zu betrachtende Steuerelektronik ausgelöst wird, in bestimmten Abtastintervallen die Leistungsendstufe, die die eigentliche Steuerung des Stellmotors vornimmt, so lange angesteuert werden, bis die tatsächliche Motordrehzahl mit der festgelegten Mindestdrehzahl übereinstimmt. Sollte trotz der stufenweisen Pulsweitenmodulation des Steuersignals die Mindestdrehzahl des Stellmotors nicht erreicht werden, ist zumindest festgestellt, daß der Stellmotor mit seinem maximalen Drehmoment betrieben wird und möglicherweise eine Fehlerquelle, beispielsweise in der Verstellmechanik, vorliegt.

## Patentansprüche

1. Verfahren zur Drehzahlsteuerüng eines Motors, wobei ein auf eine den Motor ansteuernde Leistungsstufe geführtes Steuersignal pulsweitenmoduliert wird und dabei der Drehzahlverlauf des Motors überwacht und mit einem erwarteten Drehzahlverlauf verglichen wird, dadurch gekennzeichnet, daß zur Erzielung eines Sanftstarts und/oder Sanftstops des Motor die Pulsweitenmodulation des Steuersignals wegabhängig unter Verwendung eines Inkrementalgebers gesteuert wird.

2. Verfahren nach Anspruch 1, dadurch gekennzeichnet, daß die Pulsweitenmodulation des Steuersignals zeit- und wegabhängig gesteuert wird.

3. Verfahren nach einem der vorhergehenden Ansprüche, dadurch gekennzeichnet, daß die Pulsweitenmodulation des Steuersignals monoton erfolgt.

4. Verfahren nach einem der vorhergehenden Ansprüche, dadurch gekennzeichnet, daß über das Steuersignal eine Drehzahlerhöhung oder Drehzahlreduzierung des Motors direkt proportional erfolgt.

5. Verfahren nach einem der vorhergehenden Ansprüche, dadurch gekennzeichnet, daß die Pulsweitenmodulation des Steuersignals vom bzw. auf einen von Null abweichenden Ausgangs- bzw. Endwert erfolgt.

6. Verfahren nach einem der vorhergehenden Ansprüche, dadurch gekennzeichnet, daß die Motordrehzahl überwacht und mit einem Referenzwert verglichen wird und bei einer Mindestabweichung der Motordrehzahl von einem Referenzwert über ein vorgegebenes Intervall die Pulsweitenmodulation des Steuersignals verändert wird.

## Claims

1. Method for controlling the speed of a motor, it being the case that a control signal led to a power output element controlling the motor is subjected to pulse width modulation and, in the process, the speed characteristic of the motor is monitored and compared width an expected speed characteristic, characterized in that for the purpose of achieving a soft start and/or a soft stop of the motor the pulse width modulation of the control signal is controlled as a function of position using an incremental encoder.

2. Method according to Claim 1, characterized in that the pulse width modulation of the control signal is controlled as a function of time and position.

3. Method according to one of the preceding claims, characterized in that the pulse width modulation of a control signal is performed monotonically.

4. Method according to one of the preceding claims, characterized in that the control signal produces a directly proportional increase in speed or reduction in speed of the motor.

5. Method according to one of the preceding claims, characterized in that the pulse width modulation of the control signal is performed from the or to an output or final value differing from zero.

6. Method according to one of the preceding claims, characterized in that the motor speed is monitored and compared with a reference value, and in the event of a minimum deviation of the motor speed from a reference value the pulse width modulation of the control signal is varied over a prescribed interval.

## Revendications

1. Procédé de régulation de la vitesse d'un moteur, dans lequel on exécute une modulation d'impulsions en largeur pour un signal de commande amené à un étage de puissance commandant le moteur et dans ce cas on contrôle le déroulement de la vitesse de rotation du moteur et on le compare à un déroulement de la vitesse de rotation attendu,
caractérisé en ce que
pour obtenir un démarrage en douceur et/ou un arrêt en douceur du moteur on commande la modulation des impulsions en largeur du signal de commande en fonction du trajet en utilisant un capteur incrémentiel.

2. Procédé selon la revendication 1,
caractérisé en ce que
la modulation des impulsions en largeur du signal de commande est commandée en fonction du temps et du trajet.

3. Procédé selon l'une des revendications précédentes,
caractérisé en ce que
la modulation des impulsions en largeur du signal de commande a lieu de façon monotone.

4. Procédé selon l'une des revendications précédentes,
caractérisé en ce que
une augmentation de la vitesse de rotation ou une réduction de la vitesse de rotation du moteur a lieu au moyen du signal de commande de façon directement proportionnelle.

5. Procédé selon l'une des revendications précédentes,
caractérisé en ce que
la modulation des impulsions en largeur du signal de commande a lieu à partir d'une valeur de départ ou d'une valeur finale ou à une telle valeur s'écartant de zéro.

6. Procédé selon l'une des revendications précédentes,
caractérisé en ce qu'
on surveille la vitesse de rotation du moteur et on la compare à une valeur de référence, et dans le cas d'un écart minimal de la vitesse de rotation du moteur par rapport à une valeur de référence on modifie sur un intervalle prédéfini la modulation des impulsions en largeur du signal de commande.
